(19) Europäisches Patentamt
European Patent Office
Office européen des brevets

(11) **EP 4 640 755 A1**

(12) **EUROPEAN PATENT APPLICATION**

(43) Date of publication:
**29.10.2025 Bulletin 2025/44**

(21) Application number: **24305660.3**

(22) Date of filing: **26.04.2024**

(51) International Patent Classification (IPC):
**C08L 23/08** (2025.01)   **C08L 77/02** (2006.01)

(52) Cooperative Patent Classification (CPC):
(C-Sets available)
**C08L 23/0815; C08L 77/02;** C08L 2205/03  (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ARKEMA FRANCE**
**92800 Puteaux (FR)**

(72) Inventor: **WEAVER, Keith**
**KING OF PRUSSIA, PA 19406 (US)**

(74) Representative: **Arkema Patent**
**Arkema France**
**DRD-DPI**
**51, Esplanade du Général de Gaulle**
**CS 10478**
**92907 Paris La Défense Cedex (FR)**

(54) **THERMOPLASTIC POLYMER COMPOSITION COMPRISING A POLYOLEFIN AND A COMBINATION OF POLYAMIDES AS A PROCESSING AID**

(57)    The present invention relates to a thermoplastic polymer composition comprising a matrix polymer (A) and a polymer processing aid (B), wherein the polymer processing aid (B) comprises a polyamide (B1) and a polyamide (B2), and wherein the weight-average molecular weights of (B1) and (B2) differ by at least 10 kDa. The present invention also relates to a process of melt extrusion of this thermoplastic polymer composition and to an extruded article thus obtained.

**EP 4 640 755 A1**

(52) Cooperative Patent Classification (CPC): (Cont.)

C-Sets
**C08L 23/0815, C08L 77/02;**
**C08L 23/0815, C08L 77/02, C08L 77/02**

**EP 4 640 755 A1**

## Description

<u>TECHNICAL FIELD</u>

The present invention relates to a thermoplastic polymer composition comprising a matrix polymer (A) and a polymer processing aid (B), wherein the polymer processing aid (B) comprises a polyamide (B1) and a polyamide (B2), and wherein the weight-average molecular weights of (B1) and (B2) differ by at least 10 kDa. The present invention also relates to a process of melt extrusion of this thermoplastic polymer composition and to an extruded article thus obtained.

<u>TECHNICAL BACKGROUND</u>

In an extrusion process, typically a melt extrusion process, a matrix polymer, typically in the form of pellets or powder, is fed into an extruder and heated to a temperature above its melting point to produce a polymer melt. The polymer melt is then conveyed through an extrusion die located at the end of the extruder and formed into a desired shape such as a tube, sheet or film.

During the extrusion process, the polymer melt is subjected to shear stresses that in part can cause quality defects on the product's surface, with the most common quality defect being "melt fracture". Melt fracture appears as a surface haze often described as appearing matt in finish, and under magnification, visually appears as a rough surface and having a saw tooth pattern.

As a polymer melt exits the die, the slower moving polymer in direct contact with the die accelerates quickly. This quick acceleration often causes cohesive fracture on the polymer surface referred to as melt fracture. Melt fracture is normally considered an unacceptable quality problem that adversely affects optical and visual characteristics of the final product (an example would be a blown film). Melt fracture can also adversely affect physical and mechanical properties of the final product.

The formation of melt fracture is most prevalent when extruding for example high molecular weight polyolefin polymers. A high molecular weight polymer is often chosen to obtain improved physical and mechanical properties of the film produced, such as higher tensile strength at break. Other times, higher molecular weight polymers are selected for needed processing characteristics such as increased polymer melt strength. Processes such as blown film and pipe extrusion are common examples of processes that benefit from polymers having higher melt viscosities.

A quality problem sometimes attributed to melt fracture is polymer build-up at the die exit, and this problem is often referred to as die drool. When melt fracture occurs, small polymer melt particles can shed from the surface and collect on tooling surfaces near the die exit. Over time, the small melt particles build up to form die drool. Because die drool tends to remain on the die for extended periods of time, it can burn and form solid specks that eventually release from the die to form quality defects (such as drag marks) on the product. Such problems, in addition to increasing scrap rate and labor costs, tend to limit overall production rates. Additives such as mineral fillers (contained in many polymer compounds) can further promote melt fracture and die drool formation.

Melt fracture and die drool formation often occur in association with another phenomena called die swell. The formation of die swell is associated with the quick release of elastic stresses in the melt as the melt exits the die. The presence of excessive die swell is known to contribute to quality problems.

Extrusion of polymers having low melt index often generates high melt pressures. Often times, the production speed is limited by the maximum melt pressure rating for the system being used.

To address and resolve these problems, various polymer processing aids (PPAs) have been proposed. A polymer processing aid may work by depositing a "slippery" coating on internal tooling surfaces that are in direct contact with the polymer melt. This creates "wall slip" where the polymer at the interface with the wall of the die slips, thereby reducing the melt stress as the melt exits the die. The polymer melt can then flow through the die with less shear stress formation, which eliminates melt fracture and lower melt pressures. Polymer processing aids can provide multiple benefits including but not limited to reduction or elimination of melt fracture (leading to visually clearer products), lower die swell, lower die drool formation, lower melt pressures, faster line speeds, and improved product properties.

For melt processable thermoplastic polymers (and compounds), there exists a shear rate that if processed below will produce only a smooth surface (and often shiny), and if above will produce a rough (and often dull) surface. The shear rate at which surface defects are first observed is referred to as the Critical Shear Rate (CSR). Below the CSR, the polymer surface is normally smooth, and just above the CSR, melt fracture begins to form. As a general rule, as shear rate increases above the CSR, the size or intensity of the melt fracture also increases. An example polymer having these characteristics would be a polyolefin polymer such as a LLDPE resin (linear low-density polyethylene) used in the manufacture of blown films. Other examples include LDPE (low-density polyethylene), MDPE (medium-density polyethylene), UHDPE (ultra high-density polyethylene) or HDPE (high-density polyethylene).

Low Melt Index LLDPE polymers typically have low critical shear rates and are more prone to melt fracture formation. As a general rule, the lower the polymer Melt Index, the more prone the polymer will be to melt fracture formation.

Since low Melt Index LLDPE polymers are normally used to produce a blown film, as would be expected, melt fracture issues are a common concern for such processes.

US2013/093118 describes a composition comprising a polyolefin and a polymer which can be a polyamide, copolyamide, a second polyolefin different from the first one, copolymers of ethylene and vinyl acetate (EVA), copolymers of ethylene and vinyl alcohol (EVOH), polystyrene, polycarbonate and polyvinyl chloride (PVC).

WO 2023/017327 describes a polymer processing aid comprising a block copolymer having polyamide blocks and polyether blocks, which reduces melt defects in a polyethylene composition. The composition may further comprise a basic co-stabilizer of the polyolefin, which may be selected among various compounds including polyamides.

The inventors have also shown that a polyamide such as PA11 could be used as a polymer processing aid in polyolefin compositions to reduce melt fracture (EP 23305336.2).

However, there remains a need for PPA additives which are more effective than PPAs known in the art, especially in the reduction of melt fracture.

## SUMMARY OF THE INVENTION

The present invention makes it possible to address the need expressed above by providing a PPA comprising a combination of two polyamides differing by their weight-average molecular weight. It provides, more particularly, PPA additives that improve the processability of extruded polymers and in particular that reduce melt fracture, and possibly also reduce or eliminate die buildup and/or surface defects in polymer compositions during extrusion process.

The present invention thus provides a thermoplastic polymer composition comprising a matrix polymer (A) selected from polyolefins and a polymer processing aid (B), wherein the polymer processing aid (B) comprises a polyamide (B1) and a polyamide (B2), and wherein the weight-average molecular weights of (B1) and (B2) differ by at least 10 kDa.

According to another aspect, the present invention provides a process for melt extrusion of the thermoplastic polymer composition as defined above, comprising the step of feeding the matrix polymer (A) and the polyamides (B1) and (B2) to the extruder, preferably as one or more masterbatches.

This invention is further directed to an extruded article obtained by this process, which is selected from a blown film, a cast film, a tube, a pipe, a wire, a fiber, a cable, a wire coating and a cable jacketing, preferably a blown film.

Another object of this invention is the use of a polymer processing aid (PPA) as defined above for the extrusion of a thermoplastic polymer composition comprising a polyolefin into an article such as a blown film, a cast film, a tube, a pipe, a wire, a fiber, a cable, a wire coating and a cable jacketing, in order to reduce melt fracture in the article.

Still another object of this invention is a process for reducing melt fracture in an article obtained by melt extrusion of a thermoplastic polymer comprising a polyolefin, comprising the step of adding to the thermoplastic polymer a polymer processing aid (PPA) as defined above.

## DETAILED DESCRIPTION

The invention will now be described in more detail without limitation in the following description.

According to the invention, a polymer processing aid is used for improving the processability of an extruded thermoplastic composition comprising a matrix polymer, more specifically a polyolefin composition.

The term "polymer processing aid" or PPA, also referred to as "extrusion agent", refers to an additive used to improve the conversion of polymer materials, to improve the extrusion processability of polymer materials, and/or to reduce quality defects such as melt fracture and die buildup which may arise during extrusion processes, and may also improve mechanical and/or optical properties of the extruded materials.

Examples of the improvement provided by the use of the PPA according to the invention include, but not limited to, elimination or reduction of melt fracture (shark skin); improvement of film transparency; improvement of smoothness and surface aspect; improvement of product appearance; improvement of mechanical properties; reduction of gels; gauge control; maintenance time reduction; reduction of die build-up; consistency of production; smoother extrusion conditions; lower energy consumption; reduction of cycle times and quicker transition; reduction of potential negative interaction with other film additives such as antiblock and hindered amine light stabilizers (HALS); reduction of extruder torque; and/or reduction of polymer critical shear rate.

A common means of evaluating PPA performance is to measure the time to eliminate melt fracture once the PPA is introduced. A typical test involves setting up extrusion conditions favorable to melt fracture formation that include proper selection of tooling, polymers and process conditions. Once the correct conditions for melt fracture formation are obtained, and the process is stable, PPA can then be added, and the time to eliminate melt fracture recorded. A better performing PPA is one that requires less time to eliminate melt fracture. The elapsed time after extruder start-up in which extruded articles exhibit a high degree of melt fracture before obtaining an extrudate having a smooth surface, free of melt fracture, is also designated as a conditioning time.

In general, PPAs found capable of eliminating melt fracture quickly are also found to provide better efficiency. As an example, when producing a blown film, if one PPA can eliminate melt fracture in 30 minutes and another PPA in 40 minutes, the PPA able to eliminate melt fracture in 30 minutes is said to be more efficient at eliminating melt fracture.

The matrix polymer (A) and the PPA (B) according to the present invention will now be described in further detail.

PPA

According to the present invention, a blend of two polyamides is used as a polymer processing aid (PPA), which differ from each other by their weight-average molecular weight.

The weight-average molecular weight, or mass-average molar mass $M_w$ is expressed as PMMA equivalents (used as a calibration standard) and can be measured by size exclusion chromatography (SEC) according to the standard ISO 16014-1: 2019, the polymer being dissolved in hexafluoroisopropanol stabilized with 0.05 M potassium trifluoroacetate for 24 h at room temperature at a concentration of 1 g/L before being passed through the columns, for example at a flow rate of 1 ml/min, the molar mass being measured by the refractive index. Size exclusion chromatography can be performed using columns of modified silica, for example on a set of two columns and a pre-column of modified silica (such as the PGF columns and pre-columns from Polymer Standards Service) comprising a 1000 Å column, with dimensions of $300 \times 8$ mm and a particle size of 7 $\mu$m, a 100 Å column, with dimensions of $300 \times 8$ mm and a particle size of 7 $\mu$m and a pre-column with dimensions of $50 \times 8$ mm, for example at a temperature of 40° C.

In this invention, the polymer processing aid (B) comprises a polyamide (B1) and a polyamide (B2), wherein the weight-average molecular weights of (B1) and (B2) differ by at least 10 kDa, preferably by at least 15 kDa, for instance by at least 20 kDa or even by at least 30 kDa. In addition, the weight-average molecular weights of (B1) and (B2) typically differ by at most 125 kDa, preferably by at most 70 kDa, more preferably by at most 50 kDa.

For instance, the weight-average molecular weight of polyamide (B1) may range from 30 to 120 kDa, preferably from 40 to 100 kDa, more preferably from 60 to 90 kDa whereas the weight-average molecular weight of polyamide (B2) may range from 1 to 100 kDa, preferably from 20 to 80 kDa, more preferably from 40 to 70 kDa.

In some embodiments, the weight ratio of polyamide (B1) to polyamide (B2) ranges from 100:1 to 1:100, preferably from 25:1 to 1:25, more preferably from 10:1 to 1:10, still preferably from 10:1 to 1:3 and still more preferably from 9:1 to 2:1.

Polyamides (B1) and (B2) may be independently selected from a homopolyamide, i.e. a polyamide obtained from a single type of monomer, or a copolyamide, i.e. a polyamide obtained from several types of different monomers.

The monomer (repeating unit) constituting the polyamide can be chosen from units derived from an amino acid, a lactam and a unit corresponding to the formula (Ca diamine).(Cb diacid), with a representing the number of carbon atoms of the diamine and b representing the number of carbon atoms of the diacid, a and b each ranging from 4 to 36.

When the unit represents a unit derived from an amino acid, it can be chosen from 9-aminononanoic acid (A=9), 10-aminodecanoic acid (A=10), 12-aminododecanoic acid (A=12) and 11-aminoundecanoic acid (A=11) and also its derivatives, in particular N-heptyl-11-aminoundecanoic acid.

When the unit represents a unit derived from a lactam, it can be chosen from pyrrolidinone, 2-piperidinone, caprolactam (A=6), enantholactam, caprylolactam, pelargolactam, decanolactam, undecanolactam and lauryllactam (A=12).

When the unit represents a unit derived from a unit corresponding to the formula (Ca diamine).(Cb diacid), the (Ca diamine) unit is chosen from linear or branched aliphatic diamines, cycloaliphatic diamines and alkylaromatic diamines.

When the diamine is aliphatic and linear, of formula $H_2N-(CH_2)a-NH_2$, the (Ca diamine) monomer is preferentially chosen from butanediamine (a=4), pentanediamine (a=5), hexanediamine (a=6), heptanediamine (a=7), octanediamine (a=8), nonanediamine (a=9), decanediamine (a=10), undecanediamine (a=11), dodecanediamine (a=12), tridecanediamine (a=13), tetradecanediamine (a=14), hexadecanediamine (a=16), octadecanediamine (a=18), octadecenediamine (a=18), eicosanediamine (a=20), docosanediamine (a=22) and diamines obtained from fatty acids.

When the diamine is aliphatic and branched, it can comprise one or more methyl or ethyl substituents on the main chain. For example, the (Ca diamine) monomer can advantageously be chosen from 2,2,4-trimethyl-1,6-hexanediamine, 2,4,4-trimethyl-1,6-hexanediamine, 1,3-diaminopentane, 2-methyl-1,5-pentanediamine and 2-methyl-1,8-octanediamine.

When the (Ca diamine) monomer is cycloaliphatic, it is preferentially chosen from bis(3,5-dialkyl-4-aminocyclohexyl)methane, bis(3,5-dialkyl-4-aminocyclohexyl) ethane, bis(3,5-dialkyl-4-aminocyclo-hexyl)propane, bis(3,5-dialkyl-4-amino cyclohexyl)butane, bis(3-methyl-4-aminocyclohexyl)methane (BMACM or MACM), p-bis(aminocyclohexyl) methane (PACM) and isopropylidenedi(cyclohexylamine) (PACP). It can also comprise the following carbon-based backbones: norbornylmethane, cyclohexylmethane, dicyclohexylpropane, di(methylcyclohexyl) and di(methylcyclohexyl)propane. A non-exhaustive list of these cycloaliphatic diamines is given in the publication "Cycloaliphatic Amines" (Encyclopedia of Chemical Technology, Kirk-Othmer, 4th Edition (1992), pp. 386-405).

When the (Ca diamine) monomer is alkylaromatic, it is preferentially chosen from 1,3-xylylenediamine and 1,4-xylylenediamine.

When the unit is a unit corresponding to the formula (Ca diamine).(Cb diacid), the (Cb diacid) unit may be chosen from linear or branched aliphatic diacids, cycloaliphatic diacids and aromatic diacids.

When the (Cb diacid) monomer is aliphatic and linear, it is chosen from succinic acid (b=4), pentanedioic acid (b=5), adipic acid (b=6), heptanedioic acid (b=7), octanedioic acid (b=8), azelaic acid (b=9), sebacic acid (b=10), undecanedioic acid (b=11), dodecanedioic acid (b=12), brassylic acid (b=13), tetradecanedioic acid (b=14), hexadecanedioic acid (b=16), octadecanedioic acid (b=18), octadecenedioic acid (b=18), eicosanedioic acid (b=20), docosanedioic acid (b=22) and fatty acid dimers containing 36 carbons.

The fatty acid dimers mentioned above are dimerized fatty acids obtained by oligomerization or polymerization of hydrocarbon-based, long-chain unsaturated monobasic fatty acids (such as linoleic acid and oleic acid), as described in particular in document EP 0 471 566.

When the diacid is cycloaliphatic, it can comprise the following carbon-based backbones: norbornylmethane, cyclohexylmethane, dicyclohexylmethane, dicyclohexylpropane, di(methylcyclohexyl) and di(methylcyclohexyl)propane.

When the diacid is aromatic, it is preferentially chosen from terephthalic acid (denoted T), isophthalic acid (denoted I) and naphthalenic diacids.

The polyamides may be crystalline or amorphous and transparent.

Preferably, the polyamides according to the invention are chosen from aliphatic polyamides, more particularly those of which the chain length of the units ranges from 4 to 18, more particularly from 4 to 12. More preferentially, the polyamides according to the invention are chosen from PA6, PA10, PA11, PA12, PA6.6, PA 6.10, PA6.12, PA10.10, PA10.12, PA 12.12, or a copolyamide PA 6/12, PA 6/11, PA 6/10.10, PA 6/6.6, PA 6/6.6/12, PA 6/6.6/11, PA 6/6.6/6.10, PA 6/6.12/11, or a blend of these polymers. Homopolyamides are preferred for use in this invention. Still preferably, polyamides (B1) and (B2) are independently selected from PA6, PA6.6, PA10, PA10.10, PA11, PA12 and mixtures thereof.

The polyamide or copolyamide can be obtained by melt condensation of a single type of monomers or two different types of monomers as described above.

Some suitable polyamides or copolyamides are commercially available from ARKEMA under the trademark RILSAN®, Platamid®, or from EVONIK under the trademark VESTAMID® VESTAMELT®, or from EMS under the trademark GRILAMIDO, GRILTEX®.

A polyamide or a copolyamide according to the present invention can also be obtained by anionic polymerization of lactam(s) in solvent or in solution. Some suitable ones are commercially available under the trademark ORGASOL® from Arkema.

According to a first embodiment of this invention, the polyamides (B1) and (B2) are chemically identical, preferably (B1) and (B2) are each PA11 or PA12. It should be noted that, in this embodiment, a single polyamide having a high polydispersity index, for instance between 9 and 50, preferably from 15 to 50, could be used, that would comprise both (B1) and (B2). Polydispersity Index (PDI) is a measure of chain length homogeneity, calculated by a ratio of the weight-average molecular weight (Mw) and number average molecular weight (Mn). These values are defined via the following formulas.

$$M_n = \frac{\sum N_i M_i}{\sum N_i}$$

$$M_w = \frac{\sum N_i M_i^2}{\sum N_i M_i}$$

$$PDI = \frac{M_w}{M_n}$$

where $N_i$ is number of molecules, and $M_i$ is the molar mass of the molecules.

The polydispersity of the polyamide can be typically determined by gel permeation chromatography (GPC)-viscometry. The GPC-viscometry technique is based on the method of ASTM D6474-99 and uses a dual refractometer/-viscometer detector system to analyze polymer samples.

An example of a polyamide having such wide polydispersity is Vestosint® (EVONIK).

According to a second embodiment of this invention, the polyamides (B1) and (B2) are chemically different from each other and preferably correspond to a mixture of PA11 with PA12 or of PA10.12 with PA6.10, more preferably to a mixture of PA11 with PA12.

In any case, the PPA of this invention may comprise one or more additional polyamides having a weight-average molecular weight which differs from those of (B1) and (B2), thus resulting in multicomponent blends.

Typically, the polymer processing aid (B) represents from 50 to 100,000 ppm, preferably from 100 to 10,000 ppm and more preferably from 500 to 5,000 ppm, still preferably from 1,000 to 1,500 ppm of matrix polymer (A).

In some embodiments, the polymer processing aid comprises at least one adjuvant. In other words, the polymer processing aid and the at least one adjuvant are used together as a PPA in extruding the polymer composition. The adjuvant may be selected so as to further improve the stability and/or effectiveness of such PPA. Examples of the adjuvant include, but not limited to:

  i) Aliphatic polyesters, such as poly(caprolactone), poly(lactic acid) and poly(butylene adipate);
  ii) Poly(hydroxybutyrate);
  iii) Silicones;
  iv) Fatty acid esters, such as sorbitan monolaurate;
  v) Fatty acid amides, such as stearamide and erucamide.

Preferably, however, the PPA of this invention does not comprise any adjuvant.

Matrix polymer (A)

The matrix polymer (A) is a polyolefin. Preferably, the polyolefin comprises, essentially consists of, or consists of non-functionalized polyolefin.

The matrix polymer (A) may be selected from linear or branched, saturated or unsaturated polyolefins, such as polyethylene, polypropylene, polyisopropylene or polybutadiene, preferably the matrix polymer (A) comprises a linear low-density polyethylene (LLDPE), a low-density polyethylene (LDPE), a medium-density polyethylene (MDPE), a high-density polyethylene (HDPE), an ultra-high-density polyethylene (UHDPE), a polypropylene (PP), or combinations thereof. Preferably, the matrix polymer (A) comprises, essentially consists of, or consists of a LDPE or a LLDPE, still preferably the matrix polymer (A) comprises, essentially consists of, or consists of LLDPE.

The melt index of the matrix polymer may be from 0.01 g/10min to 100 g/10min, preferably from 0.06 g/10 min to 60 g/10 min, and more preferably from 0.06 to 10 g/10min (melt index measured with a 2.16 kg weight, with a collection shear rate of $300s^{-1}$ and at a melt temperature of 190°C). In one embodiment, these ranges apply to the matrix composition without / before PPA addition. In another embodiment, these ranges apply to the resulting thermoplastic composition after PPA addition.

The polydispersity of the matrix polymer composition may be from 1.1 to 9.0, preferably from 1.1 to 4.0, and more preferably from 1.1 to 2.5. These ranges apply to the matrix composition without / before PPA addition.

The matrix polymer may be provided as a polyolefin composition including one or more other additives, such as fillers, pigments, dyes, antioxidants, UV absorbers, light stabilizers, nucleating agents, and/or reinforcing agents. The filler can comprise dispersed organic or inorganic particles. An inorganic filler can be, for example, a silica, an alumina, a zeolite, a titanium oxide, a carbonate (for example, sodium carbonate or potassium carbonate), hydrotalcite, talc, a zinc oxide, a magnesium oxide or a calcium oxide, a diatomaceous earth, carbon black, and the like. The pigments may be inorganic or organic.

Process

In some embodiments, a blend of polyamides (B1) and (B2) (and optionally additional polyamides) forming the PPA is added in the form of a masterbatch to the matrix polymer (A). In other embodiments, polyamides (B1) and (B2) may be added as separate masterbatches to the matrix polymer (A).

In the present application, the term "masterbatch" refers to a composition comprised of the polyamide(s) pre-dispersed in a carrier polymer. The term "carrier polymer" or "diluent polymer" describes a primary component of a masterbatch, which may be or comprise the same polymer composition to be extruded. Alternatively, the carrier polymer may be or comprise a different polymer composition which does not adversely affect the extrusion behaviour of the polymer composition to be extruded. In the present application, the polymer composition to be extruded, namely the host resin or matrix polymer, is the polyolefin composition.

The masterbatch may be provided in the form of a powder, granule or pellet. The preparation of the masterbatch can use any method or process known in the art, such as the method described in US8501862.

The masterbatch is normally produced by extrusion compounding to produce a product in pellet form, but embodiments other than pellets may also be included.

The carrier polymer may be a polyolefin, which may be functionalized, non-functionalized, or a mixture thereof.

For example, it can be a polyethylene, such as a low-density polyethylene (LDPE), a high-density polyethylene (HDPE), a linear low-density polyethylene (LLDPE), a medium-density polyethylene (MDPE), or ultra-high-density polyethylene (UHDPE) or combinations thereof. It can be a polyethylene obtained using a catalyst of the metallocene type or more generally a 'single-site' catalyst, a catalyst of Phillips type or a catalyst of Ziegler-Natta type; a polypropylene, in particular an iso- or syndiotactic polypropylene; a biaxially-oriented polypropylene; a polybutene (obtained from 1-butene); a poly(3-methylbutene) or a poly(4-methylpentene). Blends of two or more polyolefins, for example a blend of an LLDPE with an LDPE can be used as the carrier.

The carrier polymer may be a copolymer, for example, ethylene acrylate (which can be found under the trademark Lotryl® from SK Functional polymer) or ethylene vinyl acetate.

The selection of a suitable polyolefin carrier polymer for the masterbatch normally addresses several concerns including miscibility in the polyolefin polymer to be used in, and ability to disperse well without gel formation. One would expect that the masterbatch prepared with a low Melt Index (high melt viscosity) carrier polymer would generate gels or have the potential of generating gels if introduced into a polyolefin polymer of a higher Melt Index. The gel formed specifically would be comprised of a large undispersed agglomerate of the masterbatch. Normally, the carrier polymer is selected to have an equal to or higher Melt Index than the matrix polymer to be used in. A typical Melt Index range for a carrier polymer is between 0.06 and 20, and a masterbatch produced with this polyethylene carrier polymer would be most suitable in polyolefin polymer having a Melt Index at or below 2.

In some embodiments, the masterbatch comprises the polyamide(s) and the adjuvant if present at levels in the range between 1 and 30% by weight, preferably between 2 and 15% by weight, more preferably between 5 and 10% by weight based on the total weight of the masterbatch.

In other embodiments, the polyamides and the adjuvant if present are directly added to the polymer composition, instead of being added in the form of one or more masterbatches. They may be added separately, simultaneously, or as a blend (in particular a dry blend), to the matrix polymer (A).

According to this invention, the process for melt extrusion of the thermoplastic polymer composition preferably comprises the step of feeding the matrix polymer (A) and the polyamides (B1) and (B2) to the extruder, as one or more masterbatches.

The masterbatches can be used in any manner known in the art, and are typically either preblended with the matrix polymer in pellet or powder form, or fed separately using suitable equipment such as loss and weight feeders, or precompounded to produce an extrudable compound. For example, the masterbatch may be added in a dry blend during extrusion processing of the matrix polymer.

The extrusion process of the present invention is typically a melt extrusion process.

The process may comprise a further step to feed one or more other additives to the extruder, such as fillers, pigments, dyes, antioxidants.

In some embodiments, the process is conducted at a shear rate which would produce a thermoplastic composition extrudate having melt fracture defects if carried out using a thermoplastic composition consisting essentially of a matrix polymer.

Article

The invention also relates to an extruded article obtained by the process according to the invention, which is selected from a blown film, a cast film, a tube, a pipe, a wire, a fiber, a cable, a wire coating and a cable jacketing, preferably a blown film.

EXAMPLES

The following examples illustrate the invention without limiting it.

Various combinations of polyamides were added to a LLDPE (PE) base matrix polymer during extrusion in a single screw extruder with a throughput of 1.43 kg/h. The LLDPE had 8 g/10 min MVR (melt volume-flow rate) for 2.16 kg weight, under the condition of collection shear rate of $350s^{-1}$ at a melt temperature of 190°C. The polyamides were added separately as 3.5% masterbatches in a carrier resin identical to the LLDPE matrix resin, targeting a level of 1,000 or 1,500 ppm in the final composition.

Taking the degree of melt fracture of LLDPE only without any additive as 100%, the time to reduce the melt fracture by 100% was obtained. The term "melt fracture" is well known to those skilled in the art and generally refers to a film having obvious signs of surface imperfections which manifest as die lines, haze bands or small bands of soft melt fracture (orange peel) or hard melt fracture (shark-skin). The phrase "melt fracture clear" means a film has a clear, defect free surface.

The results of this experiment are given in Table 1 below.

[Table 1]

| Ex | B1 | | B2 | | B1/B2 | PPA (ppm) | Time to MF clear (min) |
|---|---|---|---|---|---|---|---|
| | PA | Mw (kDa) | PA | Mw (kDa) | | | |
| 1 (comp) | PA11 | 79.1 | -- | -- | -- | 1000 | 58 |
| 2 (comp) | -- | -- | PA11 | 45.5 | -- | 1000 | 56 |
| 3 | PA11 | 79.1 | PA11 | 45.5 | 50/50 | 1000 | 50 |
| 4 (comp) | PA12 | 68.7 | -- | -- | -- | 1500 | 54 |
| 5 (comp) | -- | -- | PA12 | 50.2 | -- | 1500 | 45 |
| 6 | PA12 | 68.7 | PA12 | 50.2 | 75/25 | 1500 | 35 |
| 7 | -- | -- | PA11 | 47.9 | -- | 1000 | 45 |
| 8 | PA11 | 79.1 | PA11 | 47.9 | 25/75 | 1000 | 42 |
| 9 | PA11 | 79.1 | PA11 | 47.9 | 50/50 | 1000 | 43 |
| 10 | PA11 | 79.1 | PA11 | 47.9 | 75/25 | 1000 | 39 |
| 11 | PA11 | 79.1 | PA11 | 47.9 | 90/10 | 1000 | 39 |
| 12 (comp) | -- | -- | PA12 | 68.7 | -- | 1000 | 49 |
| 13 | PA11 | 79.1 | PA12 | 68.7 | 50/50 | 1000 | 43 |

As seen from Table 1, the melt fracture of LLDPE during extrusion was effectively reduced by the polymer processing aids of this invention. In addition, melt fracture was synergistically reduced when using a combination of high and low molecular weight polyamides, compared to a single polyamide of either high or low molecular weight.

**Claims**

1. A thermoplastic polymer composition comprising a matrix polymer (A) selected from polyolefins and a polymer processing aid (B), wherein the polymer processing aid (B) comprises a polyamide (B1) and a polyamide (B2), and wherein the weight-average molecular weights of (B1) and (B2) differ by at least 10 kDa.

2. The thermoplastic polymer composition according to claim 1, wherein the weight-average molecular weights of polyamides (B1) and (B2) differ by at least 15 kDa, for instance by at least 20 kDa or even by at least 30 kDa and/or by at most 135 kDa, preferably by at most 70 kDa and more preferably by at most 50 kDa.

3. The thermoplastic polymer composition according to claim 1 or 2, wherein the weight-average molecular weight of polyamide (B1) ranges from 30 to 120 kDa, preferably from 40 to 100 kDa, more preferably from 60 to 90 kDa.

4. The thermoplastic polymer composition according to any one of claims 1 to 3, wherein the weight-average molecular weight of polyamide (B2) ranges from 1 to 100 kDa, preferably from 20 to 80 kDa, more preferably from 40 to 70 kDa.

5. The thermoplastic polymer composition according to any one of claims 1 to 4, wherein the weight ratio of polyamide (B1) to polyamide (B2) ranges from 100:1 to 1:100, preferably from 25:1 to 1:25, more preferably from 10:1 to 1:10, still preferably from 10:1 to 1:3 and still more preferably from 9:1 to 2:1.

6. The thermoplastic polymer composition according to any one of claims 1 to 5, wherein polyamides (B1) and (B2) are chosen from PA6, PA10, PA11, PA12, PA6.6, PA 6.10, PA6.12, PA10.10, PA10.12, PA 12.12, or a copolyamide PA 6/12, PA 6/11, PA 6/10.10, PA 6/6.6, PA 6/6.6/12, PA 6/6.6/11, PA 6/6.6/6.10, PA 6/6.12/11, or a blend of these polymers, preferably polyamides (B1) and (B2) are homopolyamides, more preferably polyamides (B1) and (B2) are independently selected from PA6, PA6.6, PA10, PA10.10, PA11, PA12 and mixtures thereof.

7. The thermoplastic polymer composition according to any one of claims 1 to 6, wherein the polyamides (B1) and (B2) are chemically identical, preferably (B1) and (B2) are each PA11 or PA12.

8.  The thermoplastic polymer composition according to any one of claims 1 to 7, wherein the polyamides (B1) and (B2) are chemically different from each other and preferably correspond to a mixture of PA11 with PA12 or of PA10.12 with PA6.10, more preferably to a mixture of PA11 with PA12.

9.  The thermoplastic polymer composition according to any one of claims 1 to 8, wherein the polymer processing aid (B) represents from 50 and 100,000 ppm, preferably from 100 to 10,000 ppm, more preferably from 500 to 5,000 ppm and still preferably from 1,000 to 1,500 ppm of matrix polymer (A).

10. The thermoplastic polymer composition according to any one of claims 1 to 9, wherein the matrix polymer (A) is selected from linear or branched, saturated or unsaturated polyolefins, such as polyethylene, polypropylene, polyisopropylene or polybutadiene, preferably the matrix polymer (A) comprises a linear low-density polyethylene (LLDPE), a low-density polyethylene (LDPE), a medium-density polyethylene (MDPE), a high-density polyethylene (HDPE), an ultra-high-density polyethylene (UHDPE), a polypropylene (PP), or combinations thereof, more preferably the matrix polymer (A) comprises, essentially consists of, or consists of a LDPE or a LLDPE, still preferably the matrix polymer (A) comprises, essentially consists of, or consists of LLDPE.

11. A process for melt extrusion of the thermoplastic polymer composition according to any one of claims 1 to 10, comprising the step of feeding the matrix polymer (A) and the polyamides (B1) and (B2) to the extruder, preferably as one or more masterbatches.

12. An extruded article obtained by the process according to claim 11, which is selected from a blown film, a cast film, a tube, a pipe, a wire, a fiber, a cable, a wire coating and a cable jacketing, preferably a blown film.

13. Use of a polymer processing aid (PPA) as defined in any one of claims 1 to 9 for the extrusion of a thermoplastic polymer composition comprising a polyolefin into an article such as a blown film, a cast film, a tube, a pipe, a wire, a fiber, a cable, a wire coating and a cable jacketing, in order to reduce melt fracture in the article.

14. A process for reducing melt fracture in an article obtained by melt extrusion of a thermoplastic polymer comprising a polyolefin, comprising the step of adding to the thermoplastic polymer a polymer processing aid (PPA) as defined in any one of claims 1 to 9.

Europäisches
Patentamt

European
Patent Office

Office européen
des brevets

# EUROPEAN SEARCH REPORT

**Application Number**

EP 24 30 5660

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 104 788 950 B (CHANGSHA WUBEN NEW MATERIAL TECHNOLOGY CO LTD) 5 January 2018 (2018-01-05) * examples 8-13 * | 1-14 | INV. C08L23/08 C08L77/02 |
| A | US 10 800 209 B2 (BRIDGESTONE CORP [JP]) 13 October 2020 (2020-10-13) * examples 7, 8,9,12 * | 1-14 | |
| A | WO 2023/238032 A1 (NOVA CHEM INT SA [CH]) 14 December 2023 (2023-12-14) * table 2 * | 1-14 | |
| A | EP 0 308 090 A2 (MOBIL OIL CORP [US]) 22 March 1989 (1989-03-22) * table 1 * | 1-14 | |

**TECHNICAL FIELDS SEARCHED (IPC)**

C09J
C08L

The present search report has been drawn up for all claims

| Place of search | Date of completion of the search | Examiner |
|---|---|---|
| Munich | 21 October 2024 | Ritter, Nicola |

## ANNEX TO THE EUROPEAN SEARCH REPORT
## ON EUROPEAN PATENT APPLICATION NO.

EP 24 30 5660

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2024

| Patent document cited in search report | | Publication date | Patent family member(s) | | Publication date |
|---|---|---|---|---|---|
| CN 104788950 | B | 05-01-2018 | NONE | | |
| US 10800209 | B2 | 13-10-2020 | CN | 107922687 A | 17-04-2018 |
| | | | EP | 3345964 A1 | 11-07-2018 |
| | | | JP | 6654835 B2 | 26-02-2020 |
| | | | JP | 2017048353 A | 09-03-2017 |
| | | | US | 2018250983 A1 | 06-09-2018 |
| | | | WO | 2017039014 A1 | 09-03-2017 |
| WO 2023238032 | A1 | 14-12-2023 | NONE | | |
| EP 0308090 | A2 | 22-03-1989 | AU | 615462 B2 | 03-10-1991 |
| | | | EP | 0308090 A2 | 22-03-1989 |
| | | | JP | H0195141 A | 13-04-1989 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013093118 A
- WO 2023017327 A
- EP 23305336
- EP 0471566 A
- US 8501862 B

**Non-patent literature cited in the description**

- Cycloaliphatic Amines. Encyclopedia of Chemical Technology, Kirk-Othmer. 1992, 386-405